Europäisches Patentamt

European Patent Office

Office européen des brevets

(11) Veröffentlichungsnummer: **0 050 313**
**B2**

(12) ## NEUE EUROPÄISCHE PATENTSCHRIFT

(45) Veröffentlichungstag der neuen Patentschrift:
08.02.89

(51) Int. Cl.⁴: **C 09 B 67/20,** C 09 B 67/42,
C 09 D 11/00, C 09 B 67/08

(21) Anmeldenummer: 81108345.0

(22) Anmeldetag: 15.10.81

(54) Verfahren zur Herstellung von Pigmentgranulaten und ihre Verwendung.

(30) Priorität: 21.10.80 DE 3039642

(43) Veröffentlichungstag der Anmeldung:
28.04.82 Patentblatt 82/17

(45) Bekanntmachung des Hinweises auf die Patenterteilung:
30.01.85 Patentblatt 85/5

(45) Bekanntmachung des Hinweises auf die Entscheidung
über den Einspruch:
08.02.89 Patentblatt 89/6

(84) Benannte Vertragsstaaten:
BE CH DE FR GB IT LI NL

(56) Entgegenhaltungen:
CH-A- 329 050
DE-A- 2 526 872
FR-A- 1 222 659
FR-A- 2 282 459
GB-A- 240 852
GB-A- 978 242
NL-B- 89 099
US-A- 4 166 811

Irgalite Yellow BWK, British ink maker, Februar 1973

(73) Patentinhaber: HOECHST AKTIENGESELLSCHAFT,
Postfach 80 03 20, D-6230 Frankfurt am Main 80 (DE)

(72) Erfinder: Deubel, Reinhold, Dr., Geierfeld 51, D-6232 Bad
Soden am Taunus (DE)
Erfinder: Uhde, Christa, Richard-Wagner-Strasse 35,
D-6239 Kriftel (DE)
Erfinder: Marx, Werner, Hauptstrasse 48, D-6232 Bad
Soden am Taunus (DE)

(56) Entgegenhaltungen: (Fortsetzung)
Irgalite Yellow BTF, British ink water, Mai 1973, p. 138
Siconechtgelb GRT 75, Farbe und Lack 83 (1977), p. 317
Isol-diraylidgelb 6 R 100, Firma Köge
Siconechtgelb D 1350

Die Akte enthält technische Angaben, die nach dem
Eingang der Anmeldung eingereicht wurden und die
nicht in dieser Patentschrift enthalten sind.

## Beschreibung

Die Erfindung betrifft ein Verfahren zur Herstellung von Pigmentgranulaten, wobei man die wässrige Suspension eines feinteiligen Pigmentes mit der alkalischen Lösung eines Harzes oder einer Harzmischung versetzt, das Gemisch ansäuert, unter Rühren und Erhöhung der Temperatur über den Erweichungspunkt des Harzes auf bis zu 100 °C einem Flushprozess unterwirft und das entstehende Granulat isoliert, das dadurch gekennzeichnet ist, dass man als Harz Kolophonium oder ein Kolophoniumderivat in einer Menge von 25 bis 90 Gewichtsprozent, bezogen auf die Menge des Granulates, einsetzt. Die Granulatgrösse lässt sich hierbei durch Variation der Harzmenge, des Verdünnungsgrades, der Rührgeschwindigkeit sowie der pH- und der Temperaturführung steuern. Die für ein stabiles Granulat erforderliche Harzmenge ist abhängig von der Feinteiligkeit des eingesetzten Pigmentes und liegt zweckmässig zwischen 25 und 90 Gewichtsprozent, vorzugsweise 35 und 70 Gewichtsprozent.

Als besonders vorteilhaft bietet sich die direkte Verwendung der bei der Pigmentherstellung – z.B. bei Azopigmenten bei der Kupplung oder Verlackung – anfallenden Pigmentsuspensionen für die Durchführung des Verfahrens an, wobei die erzielte hohe Transparenz und Farbstärke der Pigmente voll zur Geltung kommt und auch beim Trocknen der Granulate erhalten bleibt. Die Durchführung des Verfahrens ist aber auch mit nachträglich in Wasser suspendierten feinteiligen Pigmenten und Pigmentpresskuchen möglich.

Selbst bei hohen Harzgehalten der Feingranulate, z.B. 50 bis 60 Gewichtsprozent, resultieren bei ihrer Verarbeitung zu Druckfarben Farbstärken, die mit den nach üblichen Verfahren hergestellten nahezu 100%igen Pigmenten vergleichbar sind.

Als Harze werden wegen der breiten Verträglichkeit mit den in Druckfarben gebräuchlichen Bindemitteln sowie ihres niedrigen Erweichungspunktes als besonders vorteilhaft Kolophonium, disproportioniertes bzw. hydriertes Kolophonium, sowie Kolophoniumderivate verwendet. Selbstverständlich müssen Harzgehalt und Temperaturführung auf das jeweils verwendete Harz abgestimmt werden.

Gegebenenfalls empfiehlt sich zur Verhinderung thermischer Oxidationsprozesse an den Harzen der Pigment-Feingranulate ein Zusatz von Antioxidantien, wie sie beispielsweise in Ullmanns Enzyklopädie der technischen Chemie, 4. Auflage, Band 8, S. 25–42 beschrieben werden, wobei sich ein Zusatz von 0,1–2 Gewichtsprozent eins sterisch gehinderten Phenol-Typs, insbesondere das Pentaerythrityl-tetrakis-[3-(3,5-ditert.-buthyl-4-hydroxy-phenyl)-propionat], besonders eignet.

Das vorliegende Verfahren lässt sich mit den üblichen Pigmenten durchführen. Besondere Bedeutung hat es jedoch für Pigmente, die vorwiegend für das Druckfarbegebiet eingesetzt werden, so z.B. Azopigmente, verlackte Azopigmente und Phthalocyaninpigmente.

Die nach dem erfindungsgemässen Verfahren hergestellten Pigmentfeingranulate sind nicht staubend und gut dosierbar. Sie lassen sich im Anwendungsmedium leicht dispergieren und ergeben z.B. in Druckfarben eine sehr hohe Farbstärke, eine gute Transparenz und eine niedrige Viskosität. Die Erfindung betrifft deshalb auch die Verwendung dieser Granulate in Druckfarben.

Es ist bekannt, die wässrige Suspension eines Pigmentes mit der alkalischen Lösung eines Harzes zu versetzen, das Gemisch dann anzusäuern, unter Rühren und Erhöhen der Temperatur über den Erweichungspunkt des Harzes auf bis zu 100 °C einem Flushprozess zu unterwerfen und das entstehende Granulat zu isolieren (vgl. US-Patentschrift 4 166 811). Es hat sich jedoch gezeigt, dass man mit den in dieser Druckschrift genannten Harzen nicht direkt ein Granulat, sondern eine zusammenhängende Masse erhält, die noch zerkleinert werden muss.

Weiterhin ist bekannt, eine wässrige Paste eines Pigmentes mit der alkalischen Lösung von Kolophonium zu mischen, das Gemisch gegen Kongopapier sauer einzustellen, das Pigment abzutrennen, zu waschen und zu trocknen (vgl. Britische Patentschrift 240.852). Nach diesem Verfahren erhält man ebenfalls kein Granulat, sondern einen festen Pigmentpresskuchen.

Schliesslich ist bekannt, wasserhaltige Pigmentpresskuchen mit geschmolzenen Harzen zusammenzukneten, wobei das Wasser abgeschieden wird (vgl. Schweizerische Patentschrift 369 243). Die erhaltene stückige Masse muss jedoch noch nachzerkleinert werden.

Im Vergleich zu den bisher bekannten Methoden zur Herstellung solcher Granulate ist das Verfahren ausserordentlich einfach in der bei der Pigmentsynthese anfallenden Suspension ohne einen Zusatz von Lösemitteln, organischen Säuren oder anderen Hilfsmitteln, die nachträglich wieder entfernt oder regeniert werden müssen, durchzuführen. Dies schliesst selbstverständlich nicht aus, dass bei dem erfindungsgemässen Verfahren untergeordnete Mengen an organischen Lösemitteln zugegen wären, beispielsweise wenn Pigmentsuspensionen eingesetzt werden, die einen gewissen Gehalt an solchen Lösemitteln aufweisen, oder wenn die alkalische Lösung eines Harzes beispielsweise wassermischbare Lösemittel wie niedermolekulare Alkohole oder Ketone enthält, die als Lösevermittler wirken können.

Bevorzugt wird der Flushprozess bei einer Temperatur bis zu 100 °C durchgeführt, d.h. es kann im offenen Gefäss gearbeitet werden. Besonders zweckmässig ist es, die Mischung durch Einleitung von Dampf zu erhitzen.

In den folgenden Beispielen beziehen sich Teile und Prozentangaben auf das Gewicht, wenn nichts anderes angegeben ist. Gewichts- und Volumenteile stehen im Verhältnis von Kilogramm und Liter.

Beispiel 1

Durch Kupplung bei 10°C zwischen pH 5,5 und 5,7 wird eine Pigmentsuspension von 47 Teilen C.I. Pigment Yellow 12 (C.I. 21090) in einem Kuppelendvolumen von 2100 Teilen hergestellt. Man neutralisiert mit verdünnter Natronlauge und gibt bei 70°C 52 Teile eines disproportionierten Kolophoniums (Erweichungspunkt 73°C, Säurezahl 150), in Form einer 10%igen Lösung in Natronlauge, sowie als Antioxidans 1 Teil Pentaerythrityltetrakis-[3-(3,5-di-tert.-butyl-4-hydroxyphenyl)-propionat], zu. Dann wird auf 80°C erhitzt und unter schwachem Rühren 31%ige Salzsäure bis zu einem pH von 4 rasch zugegeben, wobei in einem Flushprozess ein Granulat gebildet wird. Beim nachfolgenden Erwärmen mit direkter Dampfeinleitung auf 98°C wird dieser Prozess beendet. Das Produkt wird bei 60°C abfiltiert, mit Wasser salzfrei gewaschen und bei 60°C im Umluftschrank getrocknet. Man erhält 99 Teile eines rieselfähigen Granulates mit einem Teilchendurchmesser von ca. 1–4 mm. Es lässt sich sehr leicht in einem handelsüblichen Buch- und Offsetdruckfirnis zu einer Druckfarbe verarbeiten, die ohne Berücksichtigung des Harzanteils von 53% bei guter Transparenz und gutem Glanz nur geringfügig farbschwächere Drucke ergibt als eine mit der gleichen Gewichtsmenge des Ausgangspigmentes hergestellte Druckfarbe.

Beispiel 2

Setzt man im Beispiel 1 anstelle des disproportionierten Kolophoniums ein hydriertes Kolophonium mit einem Erweichungspunkt von 75°C und einer Säurezahl von 165 ein und arbeitet analog, so erhält man ebenfalls ein gut ausgebildetes Granulat.

Beispiel 3

Durch Kupplung zwischen pH 5,5 und 5,7 bei 20°C wird eine Pigmentsuspension von 60 Teilen C.I. Pigment Yellow 13 (C.I. 21100) in einem Kuppelendvolumen von 1500 Teilen hergestellt. Man neutralisiert mit verdünnter Natronlauge und gibt bei 70°C 39 Teile disproportioniertes Kolophonium als Lösung in Natronlauge zu. Anschliessend erwärmt man unter direkter Dampfeinleitung auf 98°C und hält 2 Std. bei dieser Temperatur. Nach dem Abkühlen des Reaktionsgemisches auf 80°C gibt man 1 Teil des in Beispiel 1 verwendeten Antioxidans zu und arbeitet nach Zugabe von Salzsäure entsprechend Beispiel 1 zu dem Granulat (100 Teile) auf.

Stellt man aus gleichen Gewichtsmengen Granulat und Ausgangspigment je eine Druckfarbe her, so ergibt der coloristische Vergleich etwa gleiche Farbstärken, wobei die aus dem Granulat erhaltene Druckfarbe in Transparenz und Glanz besser ist.

Beispiel 4

Durch Kupplung zwischen pH 5,5 und 5,7 bei 20°C wird eine Pigmentsuspension von 60 Teilen Mischkupplungsprodukt aus der Diazoniumverbindung von 3,3'-Dichlor-4,4'-diaminobiphenyl und einer Mischung aus 0,4 Mol 1-Acetoacetylamino-2-methoxy-benzol und 1,6 Mol 1-Acetoacetylamino-2,4-dimethyl-benzol in einem Kuppelendvolumen von 1500 Teilen hergestellt.

Man neutralisiert mit verdünnter Natronlauge und gibt bei 70°C 38 Teile disproportioniertes Kolophonium (Erweichungspunkt 73°C, Säurezahl 150) in Form einer 10%igen Lösung in Natronlauge zu. Anschliesend erwärmt man unter direkter Dampfeinleitung auf 98°C und hält 2 Std. bei dieser Temperatur. Nach dem Abkühlen des Reaktionsgemisches auf 80°C gibt man 2 Teile des in Beispiel 1 verwendeten Antioxidans zu und lässt unter schwachem Rühren 31%ige Salzsäure bis zu einem pH von 4 rasch zulaufen, wobei in einem Flushprozess ein Granulat gebildet wird. Beim nachfolgenden Erwärmen unter Dampfeinleitung auf 98°C wird dieser Prozess beendet. Das Produkt wird bei 60°C abfiltriert, mit Wasser salzfrei gewaschen und bei 60°C im Umluftschrank getrocknet. Man erhält 99,5 Teile eines rieselfähigen Granulates mit einem Teilchendurchmesser von ca. 2–5 mm.

Die Farbstärken von Granulat (60 Teile pigment) und 100%igem Ausgangspigment sind auch hier bei gleichen Einsatzmengen vergleichbar. Daraus resultiert ein hoher Farbstärkegewinn bei der durchgeführten Granulierungsmethode.

Beispiel 5

Entsprechend der Versuchsdurchführung in Beispiel 4 werden auf 55 Teile Pigment 44 Teile Kolophonium (Schmelzpunkt 60–65°C, Säurezahl 165) eingesetzt und die Salzsäurezugabe bei 98°C vorgenommen.

Es resultieren 95 Teile eines gut ausgebildeten Granulates.

Beispiel 6

Entsprechend der Versuchsdurchführung in Beispiel 4 werden auf 50 Teile Pigment 49 Teile eines Formaldehyd-Kolophonium-Kondensationsproduktes mit dem Erweichungspunkt 69°C und der Säurezahl 145 eingesetzt und die Salzsäurezugabe bei 90°C vorgenommen. Es resultieren 97 Teile eines gut ausgebildeten Granulates.

Beispiel 7

Durch Kupplung im abfallenden pH-Bereich von pH 5,8 bis 3,5 bei einer Temperatur von 60°C wird eine Pigmentsuspension von 40 Teilen Mischkupplungsprodukt aus etwa 1 Mol der Diazoniumverbindung von 1-Amino-2-methoxy-benzol-5-carbonsäure-phenylamid, gekuppelt auf 80 Mol-% (2-Hydroxy-3-naphthoyl-amino)-2-methyl-5-chlor-benzol und 20 Mol-% (2-Hydroxy-3-naphthoyl-amino)-2,5-dimenthoxy-4-chlor-benzol, in einem Kuppelvolumen von 1800 Teilen hergestellt. Man stellt mit konzentrierter Natronlauge auf pH 12 ein und gibt 59,8 Teile disproportioniertes Kolophonium als alkalische Lösung zu Anschliessend erwärmt man unter Dampfeinleitung auf 98°C und hält 2 St. bei dieser Temperatur. Nach dem Abkühlen des Reaktionsgemisches auf 80°C gibt man 0,2 Teile des in Beispiel 1 verwendeten Antioxidans zu und arbeitet nach Zugabe von Salzsäure entsprechend Beispiel 1 zu dem Granulat (99 Teile) auf.

Beispiel 8

Durch Kupplung und anschliessende Verlakkung mit Calciumchlorid-Lösung zwischen pH 9 und 7,8 bei einer Temperatur von 25°C wird eine Pigmentsuspension von 32 Teilen C.I. Pigment Red 57:1 (C.I. 15850:1) in einem Verlackungsendvolumen von 3000 Teilen hergestellt. Man gibt nach 30 minütigem Erwärmen auf 80°C 1 Teil Antioxidans gemäss Beispiel 1 und 67 Teile disproportioniertes Kolophonium als alkalische Lösung zu und lässt unter schwachem Rühren 31%ige Salzsäure bis zu einem pH von 3 langsam zutropfen. Nach dem Erwärmen auf 98°C wird das gebildete Granulat wie in Beispiel 1 aufgearbeitet.

Beispiel 9

32 Teile Pigmentsuspension von C.I. Pigment Red 57:1, hergestellt gemäss den in Beispiel 8 angegebenen Bedingungen, werden abgesaugt und salzfrei gewaschen. Der feuchte Filterkuchen wird in Wasser zu einer 1,5%igen Pigmentsuspension angerührt und mit 1 Teil des in Beispiel 1 verwendeten Antioxidans versetzt. Dann gibt man 67 Teile disproportioniertes Kolophonium entsprechend Beispiel 1 bei 70°C zu und lässt unter schwachem Rühren 31%ige Salzsäure bis zu einem pH von 3 langsam zutropfen. Nach dem Erwärmen auf 98°C wird das gebildete Granulat wie in Beispiel 1 aufgearbeitet.

Beispiel 10

55 Teile Semichlor-Kupferphthalocyanin (C.I. Pigment Blue 15:1; C.I. 74160) werden als wässriger 30%iger Filterkuchen in einer 10%igen Lösung von 44 Teilen Harz in Natronlauge gemäss Beispiel 1 angeschlämmt und unter direkter Dampfeinleitung 2 Std. auf 98°C erwärmt. Die Pigmentsuspension wird dann auf 80°C abgekühlt und mit Wasser auf einen Feststoffgehalt von 3% verdünnt. Nach Zugabe von 1 Teil des in Beispiel 1 verwendeten Antioxidans wird unter raschem Zulauf von 31%iger Salzsäure bis pH 4 und unter langsamem Rühren die Granulatbildung eingeleitet und durch Aufheizen auf 98°C beendet.

Die Aufarbeitung erfolgt wie in Beispiel 1 angegeben. Es resultieren 99,5 Teile Granulat.

Beispiel 11

Durch Kupplung im abfallenden pH-Bereich von 5,5 bis 4,5 bei 20°C wird eine Pigmentsuspension von 50 Teilen C.I. Pigment Yellow 83 (C.I. 21108) in einem Kuppelendvolumen von 1900 Teilen hergestellt. Die Pigmentsuspension wird ca. 15 Minuten bei 85°C nachbehandelt, mit 33%iger Natronlauge auf pH 10 gestellt und mit einer 30%igen Lösung von 50 Teilen des in Beispiel 1 angeführten Harzes in Natronlauge vereinigt. Durch den raschen Zulauf einer 31%igen Salzsäure wird im pH-Bereich von 4 bis 5 die Granulatbildung eingeleitet und durch 15 minütiges Erwärmen mit Direktdampf auf 98°C beendet. Nach der Aufarbeitung entsprechend den Angaben von Beispiel 1 resultieren 99,5 Teile eines gleichmässig geformten, rieselfähigen Granulates.

Beispiel 12

Durch Kupplung im pH-Bereich 5–7 und Verlackung bei pH 6,5 und 80°C wird eine Pigmentsuspension von 55 Teilen C.I. Pigment Red 53:1 (c.l. 15585:1) in einem Verlackungsendvolumen von 1100 Teilen hergestellt. Man stellt durch Zugabe von verdünnter Natronlauge auf pH 10 ein und gibt 45 Teile des in Beispiel 1 angeführten Harzes als 25%ige Lösung in Natronlauge zu. Durch raschen Zulauf einer 31%igen Salzsäure bei 80°C bis pH 2, nachfolgendes Erwärmen auf 98°C und Aufarbeitung entsprechend Beispiel 1 werden 98 Teile eines gut ausgebildeten Granulates erhalten, das in Buch-, Offset- und Tiefdruckfarben besonders leicht dispergierbar ist.

Beispiel 13

Ersetzt man im Beispiel 1 die Hälfte des dort eingesetzten Harzes durch die gleiche Gewichtsmenge des im Beispiel 2 verwendeten Harzes und arbeitet mit dem Harzgemisch analog weiter, so erhält man ein gut ausgebildetes Pigmentgranulat.

**Patentansprüche**

1. Verfahren zur Herstellung von nicht staubenden und gut dosierbaren Pigmentgranulaten, wobei man die wässrige Suspension eines feinteiligen Pigmentes mit der alkalischen Lösung eines Harzes oder einer Harzmischung versetzt, das Gemisch ansäuert, unter Rühren und Erhöhung der Temperatur über den Erweichungspunkt des Harzes auf bis zu 100°C einem Flushprozess unterwirft und das entstehende Granulat isoliert, dadurch gekennzeichnet, dass man als Harz Kolophonium oder ein Kolophoniumderivat in einer Menge von 25 bis 90 Gewichtsprozent, bezogen auf die Menge des Granulates, einsetzt.

2. Verfahren nach Anspruch 1, dadurch gekennzeichnet, dass der Harzgehalt des Granulats zwischen 35 und 70 Gewichtsprozent beträgt.

3. Verfahren nach Anspruch 1 oder 2, dadurch gekennzeichnet, dass man von einer bei der Pigmentherstellung anfallenden Pigmentsuspension ausgeht.

4. Verfahren nach Anspruch 1 bis 3, dadurch gekennzeichnet, dass man zur Verhinderung thermischer Oxidationsprozesse an den Harzen 0,1-2-Gewichtsprozent eines Antioxidans zusetzt.

5. Verfahren nach Anspruch 1 bis 4, dadurch gekennzeichnet, dass das Harz ein disproportioniertes oder hydrierts Kolophonium ist.

6. Verfahren nach Anspruch 1 bis 5, dadurch gekennzeichnet, dass das Pigment ein Azopigment, ein verlacktes Azopigment oder ein Phthalocyaninpigment ist.

EP 0 050 313 B2

7. Verwendung eines nach Anspruch 1 bis 6 erhaltenen Granulats zur herstellung von Druckfarben.

**Claims**

1. A process for preparing dust-free and well-dosable pigment granules, which comprises adding to the aqueous suspension of a finely divided pigment an alkaline solution of a resin or a resin mixture, acidifying the mixture, subjecting it to a flush process while stirring and heating to a temperature above the softening point of the resin up to 100°C, and isolating the granules obtained, characterized in that the resin is colophony or a colophony derivative and the resin is used in an amount of from 25 to 90 weight %, related to the amount of the granules.

2. The process of claim 1, characterized in that the resin content of the granules is from 35 to 70 weight %.

3. The process of any of claims 1 to 2, characterized in that a pigment suspension as obtained in the pigment preparation is used as the starting material.

4. The process of any of claims 1 to 3, characterized in that there is added of from 0.1 to 2 weight % of an antioxidant to avoid thermal oxidation processes of the resins.

5. The process of any of claims 1 to 4, characterized in that the resin is disproportionated or hydrogenated colophony.

6. The process of any of claim 1 to 5, characterized in that the pigment used is an azo pigment, a laked azo pigment or a phthalocyanine pigment.

7. Use of the granules as obtained by any of claims 1 to 6 for preparing printing inks.

**Revendications**

1. Procédé de préparation de granulés hors-poussières et bien dosables de pigments, selon lequel on ajoute à la suspension aqueuse d'un pigment en fines particules la solution alcaline d'une résine ou d'un mélange de résines, on acidifie le mélange, on soumet ce mélange, sous agitation et élévation de la température au-delà du point de ramollissement de la résine jusqu'à 100°C à un processus de déplacement de liquide et l'on isole les granulés résultants, procédé caractérisé en ce qu'on utilise comme résine de la colophane ou un dérivé de colophane, en une quantité de 25 à 90% en poids, par rapport à la quantité des granulés.

2. Procédé selon la revendication 1, caractérisé en ce que la teneur en résine des granulés se situe entre 35 et 70% en poids.

3. Procédé selon la revendication 1 ou 2, caractérisé en ce que l'on part d'une suspension de pigment obtenue lors de la préparation du pigment.

4. Procédé selon l'une des revendications 1 à 3, caractérisé en ce que, pour empêcher des processus d'oxydation thermique, on ajoute à la résine 0,1 à 2% en poids d'un antioxygène.

5. Procédé selon l'une des revendications 1 à 4, caractérisé en ce que la résine est une colophane dismutée ou hydrogénée.

6. Procédé selon l'une des revendications 1 à 5, caractérisé en ce que le pigment est un pigment azoïque, un pigment azoïque composé par addition d'un véhicule de vernis ou un pigment de phtalocyanine.

7. Utilisation d'un granulat, obtenu selon l'une des revendications 1 à 6, pour la préparation d'encres d'imprimerie.